# EUROPEAN PATENT APPLICATION

(11) **EP 4 535 355 A1**
(43) Date of publication of application: **09.04.2025**
(21) Application number: 23815636.8
(22) Date of filing: 25.04.2023
(51) Int. Cl.: G11B 33/02, G06F 3/03, G11B 27/00, H04M 1/00

(54) **CONTACT OPERATION DEVICE AND SOUND SIGNAL PLAYBACK METHOD**

(30) Priority: 31.05.2022 JP 2022088391
(71) Applicant: YAMAHA CORPORATION, Hamamatsu-shi, Shizuoka 430-8650 (JP)
(72) Inventor: KATSUMATA Yoshihiro, Hamamatsu-shi, Shizuoka 430-8650 (JP)
(74) Representative: Hoffmann Eitle
(86) International application number: PCT/JP2023/016318
(87) International publication number: WO 2023/233875

(57) **Abstract**

A cradle 100A serving as a contact operation device includes: an arm 111 including a contact operation portion 114 at a tip end thereof, the contact operation portion 114 being configured to contact a touchscreen 205; and a support part 120 configured to support the arm 111 and including a first support mechanism configured to allow the arm 111 to move such that the contact operation portion 114 is carried in a horizontal direction, and a second support mechanism configured to allow the arm 111 to move such that the contact operation portion 114 is carried in a vertical direction.

## Description

### TECHNICAL FIELD

The present invention relates to a contact operation device and a sound signal playback method using a contact operation device.

### BACKGROUND ART

A portable information terminal having a function of playing songs, such as smartphones, is known. In a portable information terminal disclosed in Patent Literature 1, information necessary to select a music piece is provided to a user using a touchscreen.

### CITATION LIST

### PATENT LITERATURE

Patent Literature 1: JP5048768B

### SUMMARY OF INVENTION

### TECHNICAL PROBLEM

In the related art, a portable information terminal such as a smartphone starts playback of sound signals, in response to an operation of touching a touchscreen with a finger or a stylus pen. Such an operation is simple and convenient for users but does not impress users. On the other hand, even in the present day where digital audio has been advanced, record players still have strong popularity. A user moves a pickup at a tip end of an arm of the record player and brings a record needle provided on the pickup into contact with a record groove of a vinyl record. Upon the record needle contacting the record groove, the sound is emitted. The emotional movement of tension and relaxation at the moment the sound is emitted impresses many users.

The present invention has been made in view of the above circumstances, and an object thereof is to provide technical means for giving a user an operating feel similar to that of a record player.

### SOLUTION TO PROBLEM

A contact operation device according to an aspect of the present invention includes: an arm including a contact operation portion at a tip end thereof, the contact operation portion being configured to contact a touchscreen; and a support part configured to support the arm, the support part including a first support mechanism configured to allow the arm to move such that the contact operation portion is carried in a horizontal direction, and a second support mechanism configured to allow the arm to move such that the contact operation portion is carried in a vertical direction.

Further, a sound signal playback method according to another aspect of the present invention is a playback method for playing back a sound signal by a contact operation device and a portable information terminal, in which: the portable information terminal includes a touchscreen; the contact operation device includes: an arm including a contact operation portion at a tip end thereof, the contact operation portion being configured to contact the touchscreen; and a support part configured to support the arm, the support part including a first support mechanism configured to allow the arm to move such that the contact operation portion is carried in a horizontal direction, and a second support mechanism configured to allow the arm to move such that the contact operation portion is carried in a vertical direction; and the portable information terminal is configured to: display, on the touchscreen, an image of a recording medium on which a sound signal is recorded; determine, in a case in which the contact operation portion contacts the touchscreen displaying the image of the recording medium, a playback start position of the sound signal based on a contact position of the contact operation portion in the image of the recording medium; and start playback of the sound signal from the playback start position.

Further, a sound signal playback method according to another aspect of the present invention is a playback method for playing back a sound signal by a contact operation device and a portable information terminal, in which: the portable information terminal includes a touchscreen; the contact operation device includes: an arm including a contact operation portion at a tip end thereof, the contact operation portion being configured to contact the touchscreen; a support part configured to support the arm, the support part including a first support mechanism configured to allow the arm to move such that the contact operation portion is carried in a horizontal direction, and a second support mechanism configured to allow the arm to move such that the contact operation portion is carried in a vertical direction; a communication unit configured to receive a drive command from the portable information terminal; and a drive unit configured to move the contact operation portion by driving the arm in response to the drive command; and the portable information terminal is configured to: display, on the touchscreen an image of a recording medium on which the sound signal is recorded, in response to receiving a selection of a sound signal; and transmit, to the contact operation device, a drive command to cause the contact operation portion to contact a position on a screen of the touch screen, the position on the screen corresponding to a playback start position of the sound signal.

### BRIEF DESCRIPTION OF DRAWINGS

[FIG. 1] FIG. 1 is a plan view showing a configuration of a playback system that executes a sound signal playback method according to a first embodiment of the present invention.
[FIG. 2] FIG. 2 is a side view of the playback system.
[FIG. 3] FIG. 3 is a block diagram showing an electrical configuration of a contact operation device in the playback system.
[FIG. 4] FIG. 4 is a block diagram showing an electrical configuration of a portable information terminal in the playback system.
[FIG. 5] FIG. 5 is a flow chart of playback processing that is executed in the playback system.
[FIG. 6] FIG. 6 is a plan view showing an operation of the playback system.
[FIG. 7] FIG. 7 is a view illustrating a method of calculating a playback start position in the playback system.
[FIG. 8] FIG. 8 is a block diagram showing an electrical configuration of a contact operation device in a sound signal playback system according to a second embodiment of the invention.
[FIG. 9] FIG. 9 is a flow chart of playback processing that is executed in the embodiment.
[FIG. 10] FIG. 10 is a plan view showing a configuration of a sound signal playback system according to a third embodiment of the invention.
[FIG. 11] FIG. 11 is a block diagram showing an electrical configuration of a contact operation device in the playback system.
[FIG. 12] FIG. 12 is a flow chart of playback processing that is executed in the embodiment.
[FIG. 13] FIG. 13 is a flow chart of playback processing that is executed in another embodiment of the present invention.
[FIG. 14] FIG. 14 is a flow chart of playback processing that is executed in another embodiment of the present invention.

### DESCRIPTION OF EMBODIMENTS

Hereinafter, embodiments of the present invention will be described with reference to the drawings.

### <First Embodiment>

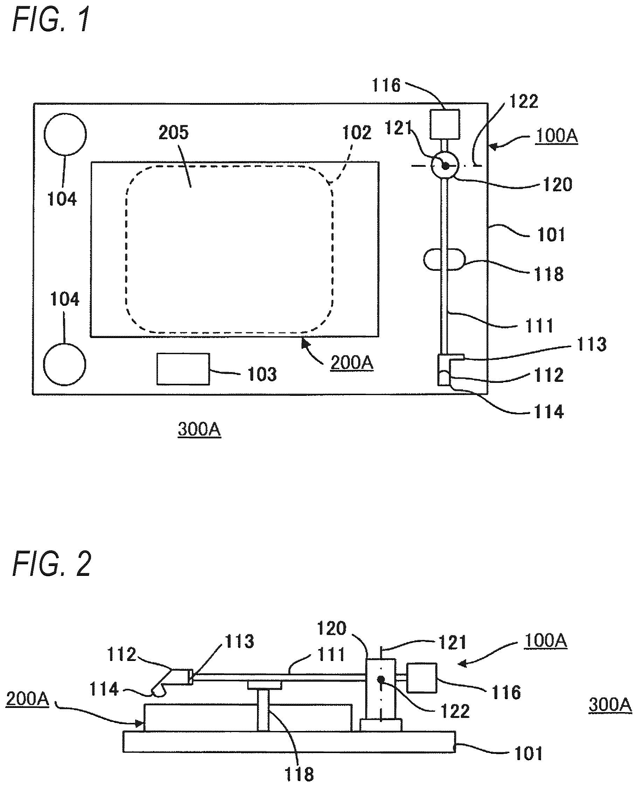

FIG. 1 is a plan view showing a configuration of a playback system 300A that executes a sound signal playback method according to a first embodiment of the present invention. FIG. 2 is a side view showing the configuration of the playback system 300A. The playback system 300A includes a smartphone 200A including a touchscreen 205 and a cradle 100A having a function of performing wireless power feeding to the smartphone 200A. In the present embodiment, the cradle 100A is a contact operation device that performs a contact operation on the touchscreen 205 of the smartphone 200A and has a shape similar to a record player. In addition, the smartphone 200A is a portable information terminal that plays back a sound signal in response to a contact operation performed by the cradle 100A.

The cradle 100A includes a base 101 in the shape of a rectangular flat plate. A substantially rectangular power feeding area 102 is provided at an approximate center of the base 101, and a primary coil (not shown) is embedded in the power feeding area 102. A user places the smartphone 200A, which is a power feeding target, on the power feeding area 102. The cradle 100A generates an AC magnetic field by flowing an AC current through the primary coil and performs wireless power feeding to the smartphone 200A placed on the power feeding area 102.

A short-range wireless communication unit 103 is arranged near one of long sides of the base 101. The short-range wireless communication unit 103 is, for example, a Bluetooth (registered trademark) communication unit and is a means for performing short-range wireless communication with the smartphone 200A as a communication partner. In the present embodiment, the cradle 100A receives a sound signal played back by the smartphone 200A via the short-range wireless communication unit 103.

Two sound output units 104 are provided near both ends of one short side of the base 101. The sound output units 104 are speakers. In the present embodiment, the cradle 100A emits sound signals received by the short-range wireless communication unit 103 from the sound output units 104.

An arm 111 supported by a support part 120 is arranged near the other short side of the base 101. A pickup 112 is attached to a tip end of the arm 111. Additionally, a counterweight 116 is attached to a rear end of the arm 111. The support part 120 supports a position, close to the counterweight 116, in the arm 111. Specifically, the support part 120 supports the arm 111 so as to be pivotable around a first axis 121 in a vertical direction and to be pivotable around a second axis 122 in a horizontal direction. The counterweight 116 serves to reduce a pivoting speed of the arm 111 when the arm pivots around the second axis 122 due to its own weight.

In addition, the base 101 is provided with a rest part 118 that supports a middle portion of the arm 111 between the support part 120 and the pickup 112 from below. When no sound signal is played back, the arm 111 is placed on the rest part 118.

A contact operation portion 114 is attached to a lower portion of the pickup 112 at the tip end of the arm 111. The contact operation portion 114 is a member configured to contact the touchscreen 205 of the smartphone 200A placed on the power feeding area 102, and is made of a conductive elastomer. The pickup 112 is provided with a handle 113. The user can pick up the handle 113 with a finger and move the pickup 112.

As described above, the arm 111 to which the pickup 112 is attached can pivot around the first axis 121. Accordingly, the contact operation portion 114 of the pickup 112 can move in an arc with a radius corresponding to a distance from the contact operation portion 114 to the first axis 121. In a state in which the smartphone 200A is properly placed on the power feeding area 102, the circular orbit passes through a center of the touchscreen 205 of the smartphone 200A. In this way, the first axis 121 functions as a first support mechanism configured to allow the arm 111 to move such that the contact operation portion 114 is carried in the horizontal direction.

Additionally, the arm 111 to which the pickup 112 is attached can pivot around the second axis 122. Accordingly, the contact operation portion 114 of the pickup 112 can contact the touchscreen 205 of the smartphone 200A by descending, or can be separated from the touchscreen 205 by ascending. In this way, the second axis 122 functions as a second support mechanism configured to allow the arm 111 to move such that the contact operation portion 114 is carried in the vertical direction.

The cradle 100A functions as a contact operation device configured to cause the contact operation portion 114 to contact a desired position on the touchscreen 205 of the smartphone 200A, or cause the contact operation portion 114 to be separated from the touchscreen 205.

Here, among the moments of inertia acting around the second axis 122 of the support part 120, the moment of inertia acting on a tip end portion of the arm 111 is greater than the moment of inertia acting on a rear end portion of the arm 111. Accordingly, when the user brings the contact operation portion 114 into contact with the touchscreen 205 and then detaches the finger from the handle 113, the contact operation portion 114 continues to remain in contact with the touchscreen 205.

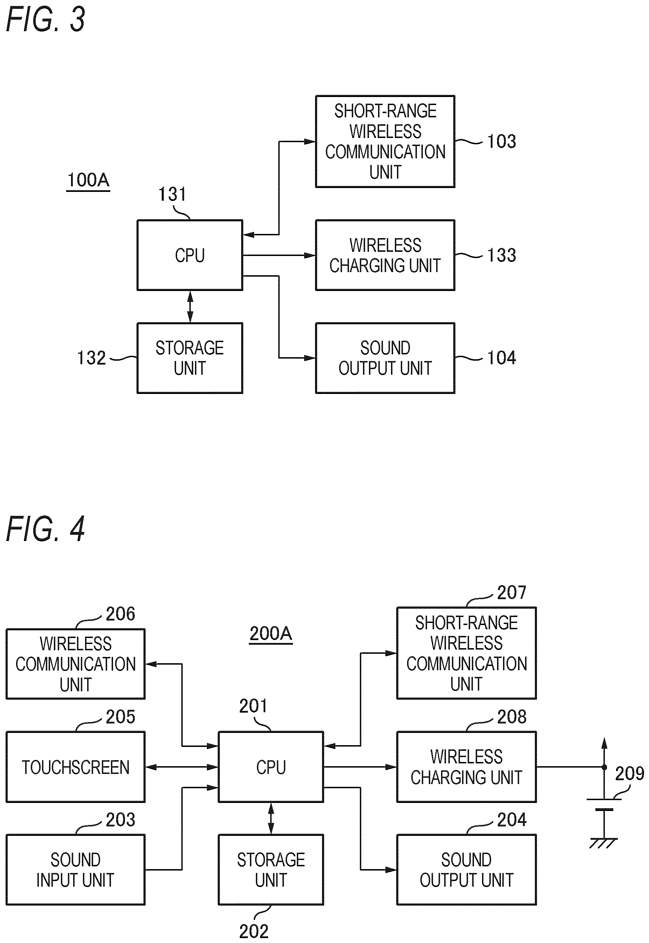

FIG. 3 is a block diagram showing an electrical configuration of the cradle 100A. As shown in FIG. 3, the cradle 100A includes a CPU 131, a storage unit 132, a short-range wireless communication unit 103, a wireless power feeding unit 133, and a sound output unit 104.

The CPU 131 is a control means for controlling each unit of the cradle 100A. The short-range wireless communication unit 103 and the sound output unit 104 are as described with reference to FIGS. 1 and 2. The wireless power feeding unit 133 includes a primary coil embedded in the power feeding area 102. The wireless power feeding unit 133 generates an AC magnetic field for power feeding to the smartphone 200A by flowing an AC current through the primary coil.

The storage unit 132 is configured by a nonvolatile storage such as a ROM and a flash memory, and a volatile storage such as a RAM. In the nonvolatile storage, a control program that is executed by the CPU 131 is stored. The volatile storage is used as a work area by the CPU 131. The CPU 131 executes the control program in the nonvolatile storage, thereby controlling power feeding by the wireless power feeding unit 133 and controlling operations of receiving a sound signal from the smartphone 200A by the short-range wireless communication unit 103 and emitting a sound by the sound output unit 104.

FIG. 4 is a block diagram showing an electrical configuration of the smartphone 200A. As shown in FIG. 4, the smartphone 200A includes a CPU 201, a storage unit 202, a sound input unit 203, a sound output unit 204, a wireless communication unit 206, a short-range wireless communication unit 207, a wireless charging unit 208, and a battery 209.

The sound input unit 203 is a microphone, and the sound output unit 204 is a speaker. The sound input unit 203 and the sound output unit 204 are mainly used as a means for calls. The touchscreen 205 is a device that has both a display function of displaying various pieces of information and an operation function of receiving a contact operation. In the present embodiment, the touchscreen 205 becomes an operation target of the contact operation portion 114 of the cradle 100A. The wireless communication unit 206 is a means for communicating with other communication devices via a network including a mobile communication network and the Internet. The battery 209 is a DC power source that supplies power to each unit in the smartphone 200A. The wireless charging unit 208 receives power from the wireless power feeding unit 133 of the cradle 100A and charges the battery 209. More specifically, the wireless charging unit 208 includes a secondary coil, which is magnetically coupled to the primary coil in the wireless power feeding unit 133, and charges the battery 209 by rectifying an AC current generated in the secondary coil and flowing the rectified current through the battery 209.

The storage unit 202 is configured by a nonvolatile storage such as a ROM and a flash memory, and a volatile storage such as a RAM. In the nonvolatile storage, a control program and an application program that are executed by the CPU 201 are stored. The volatile storage is used as a work area by the CPU 201. The CPU 201 controls each unit in the smartphone 200A by executing the control program in the non-volatile memory.

In the nonvolatile storage of the storage unit 202, one or more sound signal files in which sound signals of various music pieces are time-sequenced are stored. Additionally, in the nonvolatile storage of the storage unit 202, a playback application program that reads out a sound signal from a sound signal file and causes the CPU 201 to execute playback processing for playing back the sound signal as a sound is stored. The sound signal file and the playback application program are downloaded from, for example, a server connected to the Internet and stored in the nonvolatile storage of the storage unit 202.

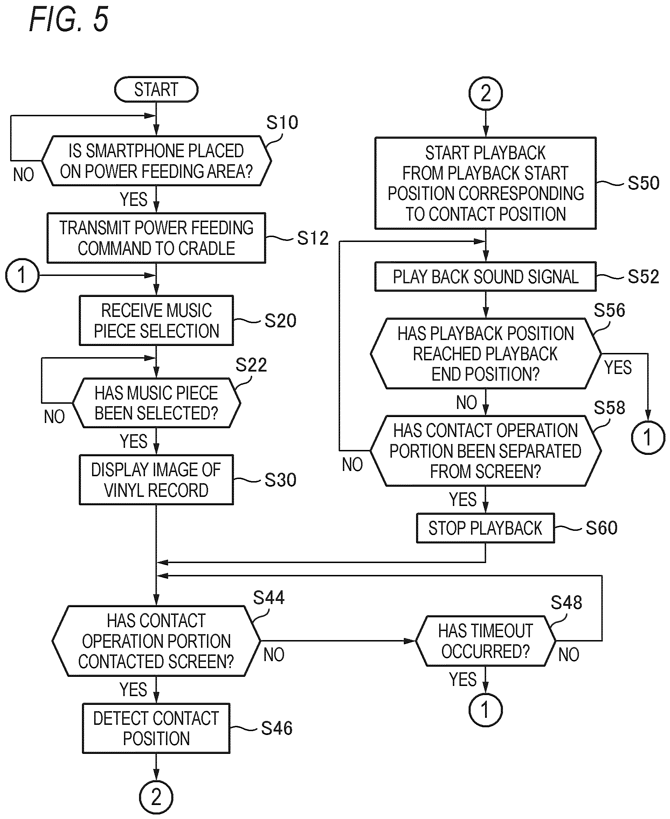

Next, operations of the present embodiment will be described. FIG. 5 is a flow chart showing playback processing that is executed by the CPU 201 according to the playback application program. When the short-range wireless communication unit 207 of the smartphone 200A establishes a wireless link with the short-range wireless communication unit 103 of the cradle 100A, the CPU 201 starts the playback processing shown in FIG. 5. First, the CPU 201 determines whether the smartphone 200A is placed on the power feeding area 102 of the cradle 100A (step S10). This determination can be made by, for example, comparing a peak level of an AC voltage generated in the secondary coil in the wireless charging unit 208 with a threshold value. If the determination result in step S10 is "NO", the CPU 201 repeats the determination in step S10. If the determination result in step S10 is "YES", the processing of the CPU 201 proceeds to step S12.

Next, when proceeding to step S12, the CPU 201 transmits a power feeding command to the cradle 100A via the short-range wireless communication unit 207. When the CPU 131 of the cradle 100A receives the power feeding command via the short-range wireless communication unit 103, the CPU 131 increases the current flowing through the primary coil of the wireless power feeding unit 133, thereby increasing the AC power supplied to the wireless charging unit 208 of the smartphone 200A. This initiates wireless charging of the smartphone 200A by the cradle 100A.

Next, when proceeding to step S20, the CPU 201 displays a menu for receiving a music piece selection on the touchscreen 205. Next, when proceeding to step S22, the CPU 201 determines whether a music piece has been selected. If the determination result is "NO", the CPU 201 repeats the determination in step S22. If the determination result in step S22 is "YES", the processing of the CPU 201 proceeds to step S30.

Next, when proceeding to step S30, the CPU 201 displays an image of a vinyl record corresponding to a sound signal file of the music piece selected by the user on the touchscreen 205. In the present embodiment, the sound signal, which is played back by the CPU 201, is stored in the sound signal file in the storage unit 202. However, the present embodiment is to give the user an operating feel similar to that of a record player. Therefore, the CPU 201, in step S30, displays, as an image of a recording medium on which a sound signal is recorded, an image of a vinyl record on the touchscreen 205. The image of the recording medium may be in the shape of a donut, imitating the shape of a vinyl record.

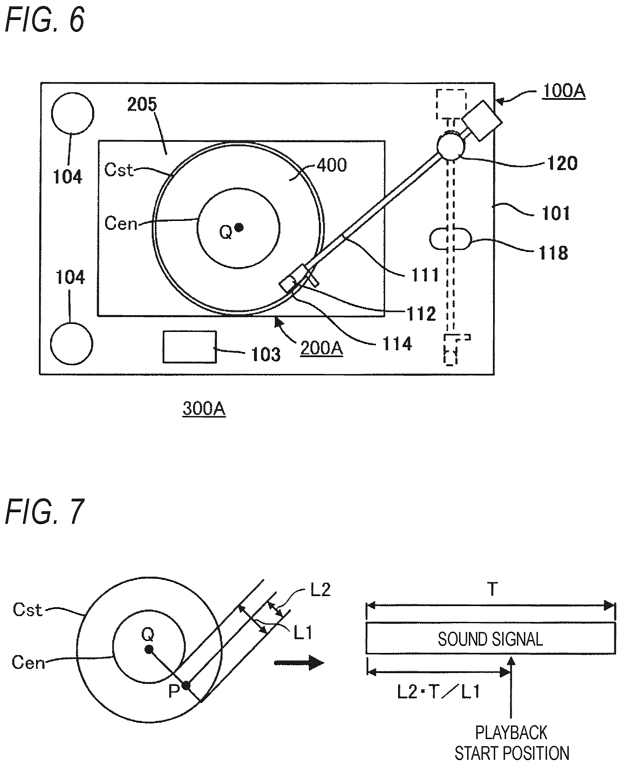

FIG. 6 is a plan view illustrating a state in which an image of a vinyl record 400 is displayed on the touchscreen 205. The image of the vinyl record 400 includes each image of a center Q of the vinyl record 400, an outermost record groove Cst of the vinyl record 400, and an innermost record groove Cen of the vinyl record 400. Here, a distance between the outermost record groove Cst and the innermost record groove Cen in the radial direction of the vinyl record 400 corresponds to a total time length of the sound signal stored in the sound signal file.

Next, when proceeding to step S44, the CPU 201 determines whether the contact operation unit 114 has made contact with a screen of the touchscreen 205. If the determination result is "NO", the processing of the CPU 201 proceeds to step S48, and if the determination result is "YES", the processing of the CPU 201 proceeds to step S46. Next, when proceeding to step S48, the CPU 201 determines whether a timeout has occurred, i.e., whether the state in which the determination result in step S44 is "NO" has continued for a predetermined time. If the determination result is "NO", the processing of the CPU 201 returns to step S44, and if the determination result is "YES", the processing of the CPU 201 returns to step S20.

If the determination result in step S44 is "YES" and the CPU 201 proceeds to step S46, the CPU 201 detects a contact position of the contact operation portion 114 on the touchscreen 205. Next, when proceeding to step S50, the CPU 201 starts playback of the sound signal from a playback start position corresponding to the contact position.

Here, the processing in step S50 is described with reference to FIG. 7. As described above, the distance L1 between the outermost record groove Cst and the innermost record groove Cen in the radial direction of the vinyl record 400 corresponds to the total time length T of the sound signal stored in the sound signal file. Therefore, the CPU 201 obtains a radial distance L2 from the record groove to which the contact position P belongs to the outermost record groove Cst in the image of the vinyl record 400 displayed on the touchscreen 205. Then, the CPU 201 sets a position advanced by L2·T/L1 from the beginning of the sound signal in the sound signal file, as the playback start position.

Next, when proceeding to step S52, the CPU 201 plays back a sound signal of a predetermined amount of time, starting from the current playback position in the sound signal in the sound signal file, and transmits it to the cradle 100A via the short-range wireless communication unit 207. The sound signal is received by the short-range wireless communication unit 103 of the cradle 100 and emitted by the sound output unit 104. As the processing of step S52 is executed, the playback position on the time axis advances by a predetermined amount of time.

Next, when proceeding to step S56, the CPU 201 determines whether the playback position has reached a playback end position. Here, the playback end position refers to the last position in the sound signal in the sound signal file. If the determination result is "NO", the processing of the CPU 201 proceeds to step S58, and if the determination result is "YES", the CPU 201 performs playback stop processing (not shown) and returns to step S20.

Next, when proceeding to step S58, the CPU 201 determines whether the contact operation portion 114 has been separated from the screen of the touchscreen 205. If the determination result is "NO", the processing of the CPU 201 returns to step S52, and if the determination result is "YES", the processing of the CPU 201 proceeds to step S60.

Accordingly, the playback of the sound signal (step S52) is repeated during the time from when the contact operation portion 114 comes into contact with the screen of the touchscreen 205 until the playback position reaches the playback end position, or until the contact operation portion 114 is separated from the screen of the touchscreen 205.

Next, when proceeding to step S60, the CPU 201 stops the playback of the sound signal in the sound signal file. Then, the processing of the CPU 201 returns to step S44.

Next, it is assumed that the user separates the contact operation portion 114 from the screen of the touchscreen 205, and brings the contact operation portion 114 into contact with the screen of the touchscreen 205 before a timeout occurs in step S48. In this case, since the determination result in step S58 is "YES," the processing of the CPU 201 proceeds to step S44 via step S60. Then, before a timeout occurs in step S48, the determination result in step S44 becomes "YES", and the CPU 201 detects the contact position of the contact operation portion 114 on the touchscreen 205 (step S46). Then, the CPU 201 sets the position corresponding to the contact position as the playback start position (step S50), and continuously plays back the sound signal starting from the playback start position in the sound signal file.

Similar processing is also performed when the user separates the contact operation portion 114 from the screen of the touchscreen 205, and then brings the contact operation portion 114 into contact with the screen of the touchscreen 205 before a timeout occurs. Accordingly, the user can play back the sound signal from a plurality of different playback positions in the sound signal file by repeating the operation of bringing the contact operation portion 114 into contact with different positions on the screen of the touchscreen 205.

Next, when the playback position reaches the playback end position, the determination result in step S56 becomes "YES", and the CPU 201 performs playback stop processing (not shown) and returns to the reception of music piece selection (step S20).

As described above, according to the present embodiment, the smartphone 200A, serving as a portable information terminal includes the touchscreen 205, and the cradle 100A serving as a contact operation device includes: the arm 111 including the contact operation portion 114 at the tip end thereof, the contact operation portion 114 being configured to contact the touchscreen 205; and the support part 120 configured to support the arm 111 and including the first axis 121 serving as a first support mechanism configured to allow the arm 111 to move such that the contact operation portion 114 is carried in the horizontal direction, and the second axis 122 serving as a second support mechanism configured to allow the arm 111 to move such that the contact operation portion 114 is carried in the vertical direction. The smartphone 200A is configured to: display, on the touchscreen 205, the image of the vinyl record 400 serving as a recording medium on which a sound signal is recorded; determine, in a case in which the contact operation portion 114 contacts the touchscreen 205 displaying the image of the vinyl record 400, a playback start position of the sound signal based on a contact position of the contact operation portion 114 in the image displayed on the touchscreen 205; and start playback of the sound signal from the playback start position. Therefore, according to the present embodiment, it is possible to give the user an operating feel similar to that of a record player.

In addition, according to the present embodiment, the smartphone 200A continues to play back the sound signal while the contact operation portion 114 remains in contact with the touchscreen 205. Therefore, in this respect as well, it is possible to give the user an operating feel similar to that of a record player.

### <Second Embodiment>

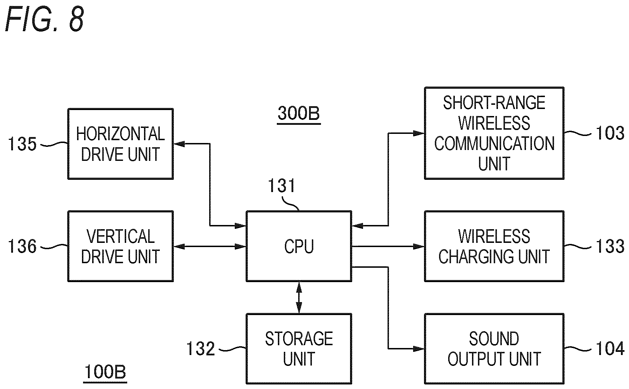

FIG. 8 is a block diagram showing an electrical configuration of a cradle 100B in a playback system 300B according to a second embodiment of the present invention.

As shown in FIG. 8, the cradle 100B has a configuration in which a horizontal drive unit 135 and a vertical drive unit 136 are added to the cradle 100A of the first embodiment. Here, the horizontal drive unit 135 includes a motor that pivots the arm 111 in FIG. 1 around the first axis 121 and moves the contact operation portion 114 in the horizontal direction. In addition, the vertical drive unit 136 includes a motor that pivots the arm 111 in FIG. 1 around the second axis 122 and moves the contact operation portion 114 in the vertical direction. The short-range wireless communication unit 103 receives a drive command regarding the arm 111 from the smartphone 200A. The CPU 131 drives the arm 111 and moves the contact operation portion 114 by controlling the horizontal drive unit 135 and the vertical drive unit 136 in response to the drive command.

The playback system 300B includes a smartphone 200A having the same configuration as that shown in the first embodiment. The smartphone 200A in the present embodiment has two additional functions, in addition to functions similar to those of the first embodiment. A first additional function is a function of causing the contact position of the contact operation portion 114 on the touchscreen 205 to follow the playback position. A second additional function is a function of lifting the contact operation portion 114 from the touchscreen 205 and moving the arm 111 to the rest part 118 when the playback of the sound signal in the sound signal file ends.

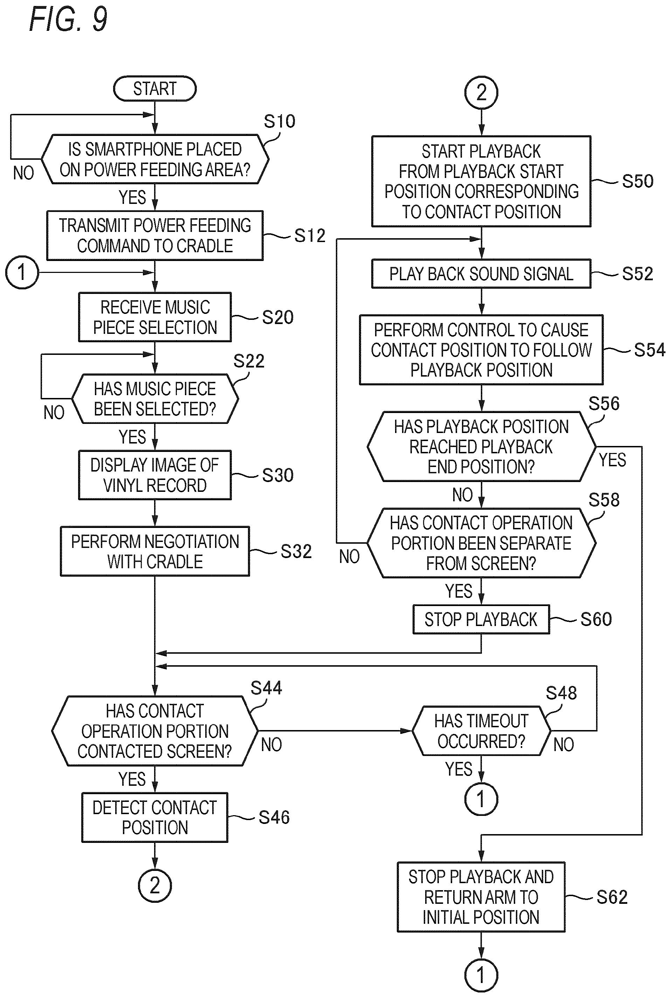

FIG. 9 is a flow chart of playback processing that is executed by the CPU 201 of the smartphone 200A according to the playback application program in the present embodiment. In the present embodiment, step S32 is added after step S30 in the playback processing of the first embodiment (see FIG. 5), step S54 is added after step S52, and step S62 is added as processing that is performed if the determination result in step S56 is "YES".

In the present embodiment, the CPU 201 displays an image of a vinyl record on the touchscreen 205 (step S30), and then perform negotiation with the cradle 100B (step S32). In the negotiation, the CPU 201 transmits information, which indicates the radius of the outermost record groove Cst of the vinyl record displayed on the touchscreen 205, the radius of the innermost record groove Cen, and the total time length T of the sound signal in the sound signal file, to the cradle 100B via the short-range wireless communication unit 207.

Then, when the processing of step S52 for playing back a sound signal over a predetermined time is completed, the CPU 201 performs control of causing the contact position of the contact operation portion 114 on the touchscreen 205 to follow the playback position (step S54). Specifically, in step S54, the CPU 202 transmits a drive command along with a playback position to the cradle 100B via the short-range wireless communication unit 207.

When the CPU 131 of the cradle 100B receives the playback position and drive command via the short-range wireless communication unit 103, the CPU 131 performs control of moving the contact position of the contact operation portion 114 to a position corresponding to the playback position.

More specifically, the CPU 131 obtains a rotation angle θ1 (e.g., a rotation angle from the rest part 118) of the arm 111 required to cause the position of the contact operation portion 114 to reach the position of the outermost record groove Cst, based on the information indicating the radius of the outermost record groove Cst of the vinyl record received in step S32.

Next, the CPU 131 obtains an additional rotation angle θ2 required to cause the position of the contact operation portion 114 to reach a position corresponding to the playback position. Specifically, when the total time length of the sound signal is referred to as T, the playback position is referred to as t, and a difference between the radius of the outermost record groove Cst and the radius of the innermost record groove Cen is referred to as LD, the CPU 201 obtains a record groove (a substantially circular groove) moved radially from the outermost record groove Cst by a distance LD·t/T, and obtains an additional rotation angle θ2 for causing the position of the contact operating section 114 to reach a position of the corresponding record groove. Then, the CPU 131 causes the horizontal drive unit 135 to execute horizontal drive in which the rotation angle of the arm 111 is set to θ1+θ2.

In addition, in the present embodiment, when the playback position reaches the playback end position and the determination result in step S56 becomes "YES", the processing of the CPU 201 proceeds to step S62. In step S62, the CPU 201 stops the playback of the sound signal and transmits a drive command for returning to the initial position to the cradle 100B via the short-range wireless communication unit 207.

When the CPU 131 of the cradle 100B receives the drive command for returning to the initial position via the short-range wireless communication unit 103, the CPU 131 vertically drives the arm 111 through the vertical drive unit 136, thereby separating the contact operation portion 114 from the touchscreen 205. Then, the CPU 131 horizontally drives the arm 111 through the horizontal drive unit 135, thereby moving the arm 111 above the rest part 118. Then, the CPU 131 vertically drives the arm 111 through the vertical drive unit 136, thereby placing the arm 111 on the rest part 118.

According to the present embodiment, the effects similar to those of the first embodiment are achieved. In addition, according to the present embodiment, the cradle 100B, serving as a contact operation device includes: the short-range wireless communication unit 103 configured to receive a drive command from the smartphone 200A; and the horizontal drive unit 135 and vertical drive unit 136 configured to move the contact operation portion 114 by driving the arm 111 in response to the drive command, and the smartphone 200A transmits a drive command to the cradle 100B to cause the contact position of the contact operation portion 114 on the touchscreen 205 to follow the playback position of the sound signal. Accordingly, according to the present embodiment, the contact position of the contact operation portion 114 on the touchscreen 205 follows the playback position of the sound signal, and in this respect as well, it is possible to give the user an operating feel similar to that of a record player.

In addition, according to the present embodiment, when the playback position of the sound signal reaches the playback end position, the smartphone 200A transmits a drive command for moving the arm 111 to the rest part 118 to the cradle 100B, and the cradle 100B moves the arm 111 to the rest part 118. Therefore, the convenience of the playback system 300B can be improved.

### <Third Embodiment>

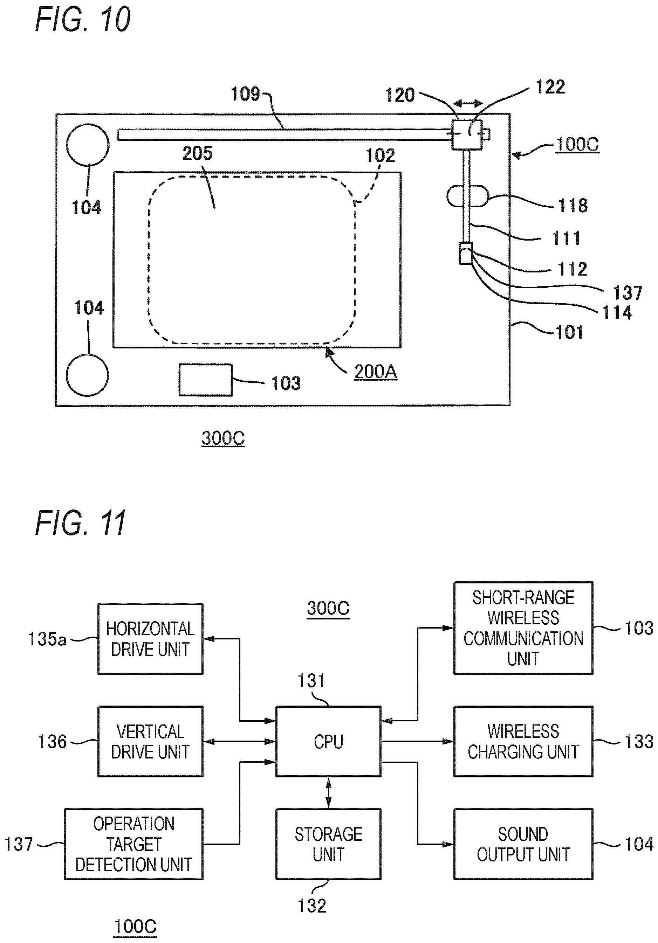

FIG. 10 is a plan view showing a configuration of a playback system 300C according to a third embodiment of the present invention. In FIG. 10, parts corresponding to each part of the first embodiment (FIG. 1) are denoted by the common reference signs, and the descriptions thereof are omitted.

In a cradle 100C of the playback system 300C, a rail 109 is provided near one long side of the base 101. The support part 120 supporting the arm 111 is supported on the rail 109. The support part 120 can slide along the rail 109. Similarly to the first embodiment, the support 120 has the second axis 122. The arm 111 can pivot around the second axis 122. Accordingly, the support part 120 functions as a first support mechanism configured to allow the arm 111 to move such that the contact operation portion 114 is carried in the horizontal direction, and a second support mechanism configured to allow the arm 11 to move such that the contact operation portion 114 is carried in the vertical direction. On the lower surface of the pickup 112, an operation target detection unit 137 is attached, in addition to the contact operation portion 114. Here, the operation target detection unit 137 is, for example, a camera that picks up an image of the touchscreen 205 of the smartphone 200A.

FIG. 11 is a block diagram showing an electrical configuration of the cradle 100C in the playback system 300C. In the cradle 100C, the operation target detection unit 137 is added to the cradle 100B of the second embodiment (FIG. 8), and further, the horizontal drive unit 135 of the cradle 100B is replaced with a horizontal drive unit 135a. This horizontal drive unit 135a includes a motor that moves the support part 120 supporting the arm 111 along the rail 109.

The playback system 300C includes a smartphone 200A having the same configuration as that shown in the first embodiment. Similarly to the second embodiment, the smartphone 200A in the present embodiment has a function of causing the contact position of the contact operation portion 114 on the touchscreen 205 to follow the playback position, and a function of lifting the contact operation portion 114 from the touchscreen 205 and moving the arm 111 to the rest part 118 when playback of a sound signal in the sound signal file ends. In addition, the smartphone 200A in the present embodiment further has two additional functions. A first additional function is a function of initiating playback of a sound signal in response to an operation on the touchscreen 205, and moving the contact operation portion 114 to a position corresponding to the playback start position and bringing it into contact. A second additional function is a function of stopping playback of a sound signal in response to an operation on the touchscreen 205 and moving the arm 111 to the rest part 118.

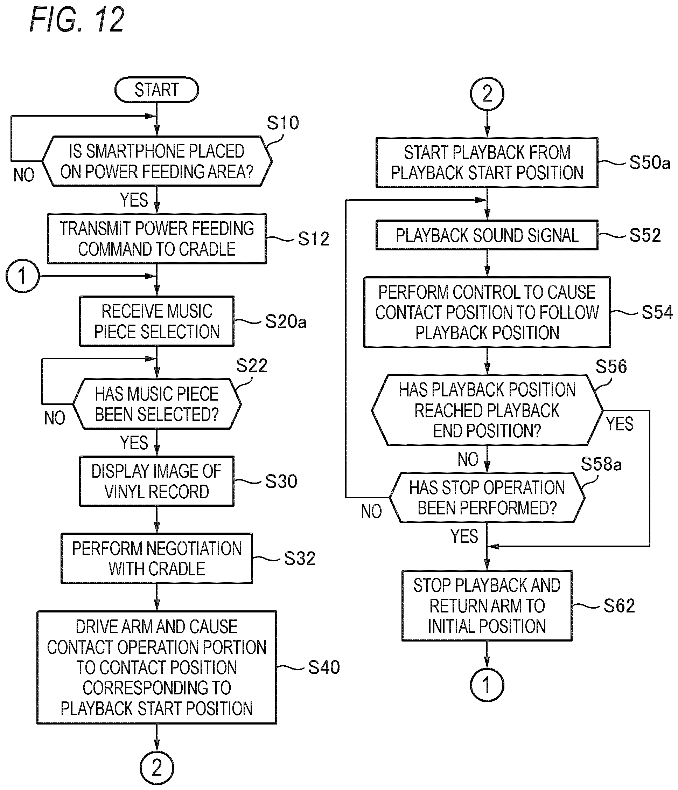

FIG. 12 is a flow chart of playback processing that is executed by the CPU 201 of the smartphone 200A according to the playback application program in the present embodiment. In the present embodiment, in the playback processing of the second embodiment (see FIG. 9), step S20 is replaced with step S20a, steps S44, S46 and S48 are replaced with step S40, and step S58 is replaced with step S58a.

In the present embodiment, the CPU 201 also receives a selection of a playback start position upon receiving a selection of a music piece, in step S20a. Specifically, when a sound signal file of a selected music piece includes sound signals of multiple songs, the CPU 201 receives a selection of a desired song among the multiple songs and obtains a playback start position of a sound signal of the corresponding song.

In addition, the CPU 201, in step S40, transmits a drive command along with the playback start position selected in step S20a to the cradle 100C via the short-range wireless communication unit 207.

When the CPU 131 of the cradle 100C receives the playback start position and drive command via the short-range wireless communication unit 103, the CPU 131 performs control of moving the contact operation portion 114 to a position corresponding to the playback start position. Specifically, the CPU 131 captures an image of the touchscreen 205 by the operation target detection unit 137 while moving the arm 111 along the rail 108. Then, when the CPU 131 detects that the position of the contact operation portion 114 has passed the position of the outermost record groove Cst and reached a position corresponding to the playback start position, based on an imaging result of the operation target detection unit 137, the CPU 131 stops the horizontal drive for the arm 111 and vertically drives the arm 111 to bring the contact operation portion 114 into contact with the touchscreen 205.

Additionally, the CPU 201 determines in step S58a whether a stop operation has been performed. The stop operation is a contact operation performed on a stop instruction icon displayed on the touchscreen 205 of the smartphone 200A. If the determination result in step S58a is "YES," similarly to the second embodiment, the CPU 201 stops the playback of the sound signal and transmits a drive command for returning to the initial position to the cradle 100B via the short-range wireless communication unit 207.

When the CPU 131 of the cradle 100B receives the drive command for returning to the initial position via the short-range wireless communication unit 103, the CPU 131 controls the vertical drive unit 136 and the horizontal drive unit 135a to move the arm 111 and place the arm on the rest part 118.

In the present embodiment as well, the effects similar to those of the second embodiment are achieved. In addition, according to the present embodiment, the smartphone 200A is configured to: display, on the touch screen 205, an image of a vinyl record on which the sound signal is recorded, in response to receiving a selection of a sound signal; and transmit, to the cradle 100C, a drive command to the cradle to cause the contact operation portion 114 to contact a position on the screen of the touchscreen 205, the position corresponding to the playback start position of the sound signal. Accordingly, the contact operation unit 114 contacts a position on the screen of the touchscreen 205 corresponding to the playback start position, and playback of the sound signal starts. Therefore, the convenience of the playback system 300C can be improved.

### <Other Embodiments>

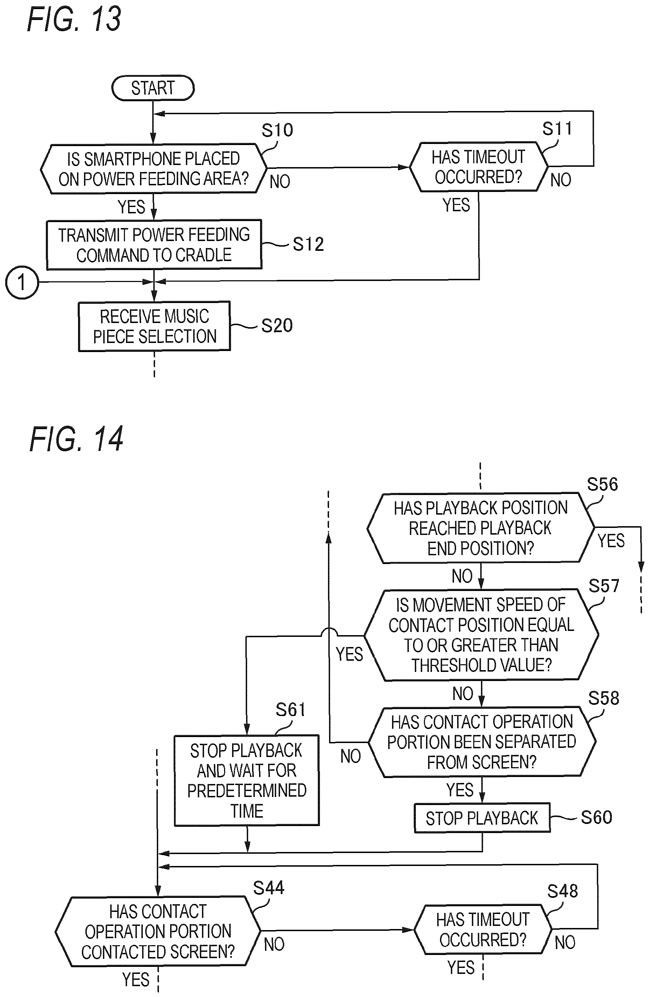

Although each embodiment of the present invention has been described, other embodiments are also conceived in the present invention. Examples thereof are described.
(1) In the first to third embodiments, the base 101 may be provided with a recess part having the same planar shape and size as the smartphone 200A, and the smartphone 200A may be accommodated in the recess part to perform wireless power feeding. In this case, it is preferable that a center of the recess part coincide with the center of the power feeding area 102, and furthermore, the center of the recess part be located on the trajectory drawn by the contact operation portion 114 when the arm 111 moves horizontally.
(2) In the first to third embodiments, the cradle having a wireless power feeding function is provided in the playback system as a contact operation device, but a contact operation device without a wireless power feeding function may be provided in the playback system. In this case, the contact operation device may have a configuration in which the base 101 is not provided and the support part 120 is fixed to a desk or a portable information terminal (such as a tablet) with a large screen area.
(3) In the second and third embodiments, the contact position of the contact operation portion 114 is caused to follow the playback position of the sound signal by transmitting the drive command along with the playback position from the smartphone to the cradle. However, instead of this configuration, the cradle may bring the contact operation portion 114 into contact with the touchscreen 205 and then move the contact position of the contact operation portion 114 toward the center of the vinyl record at a constant speed. In this case, the constant speed may be determined based on the rotation speed of the vinyl record, which is assumed to be a source of the sound signal.
(4) In the first embodiment, the smartphone 200A displays an image of the vinyl record 400 with a size fitting perfectly into the touchscreen 205 on the touchscreen 205. However, the size of the vinyl record 400 that is displayed on the touchscreen 205 is arbitrary and may be specified by the user, for example.
(5) In the first to third embodiments, wireless power feeding is not essential for playback of sound signals. Therefore, in the first to third embodiments, the playback processing may be changed as in a flow chart of FIG. 13. In this aspect, if the determination result in step S10 is "NO," the processing proceeds to step S11, and the CPU 201 determines whether a timeout has occurred, i.e., whether the state in which the determination result in step S10 is "NO" has continued for a predetermined time. If the determination result is "NO", the processing of the CPU 201 returns to step S44, and if the determination result is "YES", the processing of the CPU 201 proceeds to step S20. In this aspect, when the smartphone is not placed on the power feeding area for a predetermined time or longer, or when the smartphone is placed on a contact operation device without a wireless power feeding function, processing for playing back a sound signal is started without performing power feeding. It is also conceivable that a smartphone without a wireless charging function is placed on a cradle with a wireless power feeding function. In this case, for a smartphone without a wireless charging function, the processing of steps S10 and S12 in FIGS. 5, 9, and 12 (the processing of steps S10, S11, and S12 in the case of FIG. 13) may be omitted. In this case as well, processing for playing back a sound signal is started without performing power feeding.
(6) In the first and second embodiments, since the user can operate the arm 111, the contact position of the contact operation portion 114 on the touchscreen 205 can be moved while the sound signal is being played back. In the first and second embodiments, when the user desires to change the playback position to a desired position during playback of a sound signal, the user first separates the contact operation portion 114 from the touchscreen 205 and then moves the contact position of the contact operation portion 114 on the touchscreen 205. Here, when using a record player, to prevent a vinyl record from being scratched, the record needle is first separated from the vinyl record, and then the contact position of the record needle on the vinyl record is moved. However, in the first and second embodiments, the contact operation portion 114 is brought into contact with the touchscreen 205 displaying the image of the vinyl record. Accordingly, even if the contact position is moved while the contact operation portion 114 remains in contact with the touchscreen 205, the problem of the touchscreen 205 being scratched does not occur. Therefore, in the playback processing of the first and second embodiments, in addition to when the contact operation portion 114 is separated from the touchscreen 205, when the contact position of the contact operation portion 114 is moved by the user's operation, playback of the sound signal may be performed from a position corresponding to the moved contact position.

Specifically, the playback processing of the first embodiment (FIG. 5) and the playback processing of the second embodiment (FIG. 9) are changed as in a flow chart of FIG. 14. In this aspect, steps S57 and S61 are added to the playback processing of the first and second embodiments.

In step S57, the CPU 201 determines whether a movement speed of the contact position of the contact operation portion 114 on the touchscreen 205 is equal to or greater than a threshold value. Here, the threshold value is a predetermined value greater than a radial movement speed of the record needle of the vinyl record when the vinyl record rotates at a predetermined rotation speed (e.g., 33 rpm, 45 rpm, etc.). If the determination result is "YES", the CPU 201 considers that the contact operation portion 114 has moved by the user's operation and proceeds to processing of step S61.

Next, when proceeding to step S61, the CPU 201 stops playback of the sound signal and waits for a predetermined time. Here, the predetermined time is a time considered necessary for the user to move the contact position of the contact operation portion 114 on the touchscreen 205 to a desired position. When the processing of step S61 is completed, the processing of the CPU 201 proceeds to step S44. Thereafter, processing similar to the first embodiment or the second embodiment is performed, and playback of the sound signal is started from a playback start position corresponding to the contact position after movement (see FIG. 5 and FIG. 9). In this aspect, the user can freely change the playback location by moving the arm 111 even while the sound signal is being played.

### REFERENCE SIGNS LIST

300A, 300B, 300C: playback system
100A, 100B, 100C: cradle
200A: smartphone
111: arm
112: pickup
113: handle
114: contact operating portion
116: counterweight
118: rest part
120: support part
121: first axis
122: second axis
101: base
102: power feeding area
103, 207: short-range wireless communication unit
104, 204: sound output unit
133: wireless power feeding unit
131, 201: CPU,
132, 202: storage unit
205: touchscreen
203: sound input unit
206: wireless communication unit
208: wireless charging unit
209 battery
135, 135a: horizontal drive unit
136: vertical drive unit
137: operation target detection unit

## Claims

1. A contact operation device comprising:
an arm comprising a contact operation portion at a tip end thereof, the contact operation portion being configured to contact a touchscreen; and
a support part configured to support the arm, the support part comprising a first support mechanism configured to allow the arm to move such that the contact operation portion is carried in a horizontal direction, and a second support mechanism configured to allow the arm to move such that the contact operation portion is carried in a vertical direction.

2. The contact operation device according to claim 1, comprising a drive unit configured to move the contact operation portion by driving the arm.

3. The contact operation device according to claim 2, comprising a communication unit configured to receive a drive command for the arm,
wherein the drive unit is configured to drive the arm in response to the drive command.

4. A playback method for playing back a sound signal by a contact operation device and a portable information terminal, wherein:
the portable information terminal comprises a touchscreen;
the contact operation device comprises:
an arm comprising a contact operation portion at a tip end thereof, the contact operation portion being configured to contact the touchscreen; and
a support part configured to support the arm, the support part comprising a first support mechanism configured to allow the arm to move such that the contact operation portion is carried in a horizontal direction, and a second support mechanism configured to allow the arm to move such that the contact operation portion is carried in a vertical direction; and
the portable information terminal is configured to:
display, on the touchscreen, an image of a recording medium on which a sound signal is recorded;
determine, in a case in which the contact operation portion contacts the touchscreen displaying the image of the recording medium, a playback start position of the sound signal based on a contact position of the contact operation portion in the image of the recording medium; and
start playback of the sound signal from the playback start position.

5. The playback method according to claim 4, wherein the portable information terminal is configured to continue the playback of the sound signal while the contact operation portion contacts the touchscreen.

6. The playback method according to claim 5, wherein:
the contact operation device comprises a communication unit configured to receive a drive command from the portable information terminal, and a drive unit configured to move the contact operation portion by driving the arm in response to the drive command; and
the portable information terminal is configured to transmit a drive command to the contact operation device to cause the contact position of the contact operation portion on the touchscreen to follow a playback position of the sound signal.

7. A playback method for playing back a sound signal by a contact operation device and a portable information terminal, wherein:
the portable information terminal comprises a touchscreen;
the contact operation device comprises:
an arm comprising a contact operation portion at a tip end thereof, the contact operation portion being configured to contact the touchscreen;
a support part configured to support the arm, the support part comprising a first support mechanism configured to allow the arm to move such that the contact operation portion is carried in a horizontal direction, and a second support mechanism configured to allow the arm to move such that the contact operation portion is carried in a vertical direction;
a communication unit configured to receive a drive command from the portable information terminal; and
a drive unit configured to move the contact operation portion by driving the arm in response to the drive command; and
the portable information terminal is configured to:
display, on the touchscreen, an image of a recording medium on which the sound signal is recorded, in response to receiving a selection of a sound signal; and
transmit, to the contact operation device, a drive command to cause the contact operation portion to contact a position on a screen of the touchscreen, the position on the screen corresponding to a playback start position of the sound signal.

8. The playback method according to claim 6 or 7, wherein the portable information terminal is configured to transmit, to the contact operation device, a drive command to move the arm to a predetermined position in a case in which a playback position of the sound signal reaches a playback end position.
